# EUROPEAN PATENT APPLICATION

(11) **EP 4 461 577 A1**
(43) Date of publication of application: **13.11.2024**
(21) Application number: 23740095.7
(22) Date of filing: 13.01.2023
(51) Int. Cl.: B60K 35/00, B62D 1/04, B60R 21/203

(54) **VEHICLE-MOUNTED DISPLAY DEVICE, VEHICLE STEERING WHEEL ASSEMBLY, AND VEHICLE**

(30) Priority: 14.01.2022 CN 202220103785 U; 18.03.2022 CN 202220607675 U
(71) Applicant: Beijing Chehejia Automobile Technology Co., Ltd., Beijing 101300 (CN)
(72) Inventor: LIN, Dongnan, Beijing 101300 (CN)
(74) Representative: Regimbeau
(86) International application number: PCT/CN2023/072170
(87) International publication number: WO 2023/134754

(57) **Abstract**

A vehicle-mounted display device, a vehicle steering wheel assembly, and a vehicle. The vehicle-mounted display device comprises a decorative piece (1), wherein the decorative piece (1) comprises a connection portion (4), a touch-control display screen (2), a first mounting position (11) and a second mounting position (12); the decorative piece (1) is mounted on a base (13) of a vehicle steering wheel (3) by means of the connection portion (4); the first mounting position (11) is used for mounting the touch-control display screen (2), and the second mounting position (12) is used for mounting a vehicle airbag; and the first mounting position (11) and the second mounting position (12) are arranged side by side on the decorative piece (1), and the first mounting position (11) is located above the second mounting position (12) in the direction in which the first mounting position (11) and the second mounting position (12) are arranged.

## Description

### CROSS-REFERENCE TO RELATED APPLICATIONS

This application is based upon and claims priority to Chinese Patent Application No. 202220607675.2, filed on March 18, 2022, and Chinese Patent Application No. 202220103785.5, filed on January 14, 2022, the entire contents of which are incorporated herein by reference.

### TECHNICAL FIELD

The present application relates to the technical field of vehicles, in particular to a vehicle-mounted display device, a vehicle steering wheel assembly, and a vehicle.

### BACKGROUND

At present, a multi-functional steering wheel in a vehicle generally uses mechanical switches to interact with the vehicle, and then control related electronic systems, resulting in the lack of intelligent information display functions in the entire vehicle, which cannot meet the needs of drivers and passengers for convenient operation of driving information and related auxiliary intelligent driving functions.

Based on the aforementioned problems, an intelligent display function is added in a central control screen in the vehicle. The driver can realize the human-vehicle interaction function by operating an intelligent display system of the central control screen. However, the central control screen in the vehicle is usually arranged in a position far away from the driver. During the human-vehicle interaction, the driver needs to turn his/her head to operate the screen, which can cause the sight line of the driver to deviate from the driving direction during driving, thereby affecting the driving safety. In addition, intelligent display functions may further be added in a vehicle instrument panel. However, vehicle instruments are arranged on the instrument panel located inside the steering wheel. Due to the increasing number of vehicle parts and functions, more and more information needs to be displayed on the instrument to detect whether the vehicle parts and functions are normally operating. In addition, the driver needs to view the instrument information through the gaps in the steering wheel, which makes it difficult to obtain information and further affects the driving safety.

### SUMMARY

In order to solve the above technical problems or at least partially solve the above technical problems, the present application provides a vehicle-mounted display device, a vehicle steering wheel assembly and a vehicle, so that a driver can view the vehicle status information during driving without deviating his/her sight line from the driving direction, and can view the instrument information without the aid of the gaps in the steering wheel, which makes the interaction between the driver and the vehicle more convenient, thereby effectively improving the safety, convenience and comfort during the driving.

In a first aspect, the present application provides a vehicle-mounted display device, which includes a decorative member and a touch display screen.

The decorative member includes a connecting part, a first mounting location, and a second mounting location. The decorative member is mounted on a base of a vehicle steering wheel through the connecting part. The first mounting location is configured for mounting the touch display screen, and the second mounting location is configured for mounting a vehicle airbag.

The first mounting location and the second mounting location are arranged side by side on the decorative member, and the first mounting location is located above the second mounting location along a direction in which the first mounting location and the second mounting location are arranged.

In some embodiments, the touch display screen is embedded into the first mounting location, and the touch display screen is joined together with the vehicle steering wheel and rotates with the vehicle steering wheel.

In some embodiments, the touch display screen includes a screen component, a circuit board, and a rear casing.

The screen component corresponds to the first mounting location and is mounted on the decorative member, the rear casing corresponds to the first mounting location and is mounted on one side of the decorative member adjacent to the base, and the circuit board is arranged in an independent space formed among the rear casing, the screen component and the decorative member. The rear casing is provided with an aperture which exposes a power connector of the circuit board.

In some embodiments, a surface of the screen component away from the base is flush with a surface of the decorative member in the first mounting location away from the base.

In some embodiments, the screen component includes a liquid crystal touch display component and a backlight structure. The liquid crystal touch display component is fixed on the decorative member through an adhesive, and the backlight structure is located on one side of the liquid crystal touch display component adjacent to the circuit board and includes a plurality of MiniLEDs arranged in a matrix.

In some embodiments, brightness of the liquid crystal touch display component is controlled by the backlight structure.

In some embodiments, a first layer of fixing pillar structure and a second layer of fixing pillar structure are provided on one side of the backlight structure adjacent to the circuit board. The first layer of fixing pillar structure and the second layer of fixing pillar structure are misaligned with each other.

In some embodiments, the liquid crystal touch display component includes a touch area and a display area. An area of the touch area is larger than an area of the display area, and the display area is covered by the touch area. The display area corresponds to the backlight structure, and the plurality of MiniLEDs of the backlight structure adopts direct type MiniLEDs.

In some embodiments, the connecting part includes at least one snapping pillar, and the decorative member is mounted on the base through the at least one snapping pillar.

In some embodiments, a plurality of snapping pillars are provided on one side of the decorative member adjacent to the base, and the base of the vehicle steering wheel is provided with a plurality of foaming members, each of the plurality of snapping pillars corresponding to a respective one of the plurality of foaming members. Each of the plurality of snapping pillars is configured to be inserted into the respective one of the plurality of foaming members to form a snap-fitting between each of the plurality of snapping pillars and the respective one of the plurality of foaming members.

In some embodiments, the decorative member is in a quasi-rectangular shape, and each of four borders of the decorative member is provide with the at least one snapping pillar.

In some embodiments, the vehicle-mounted display device further includes the vehicle airbag. The second mounting location is provided with a cover plate. The cover plate covers the vehicle airbag and forms a press type whistle structure.

In some embodiments, in the direction in which the first mounting location and the second mounting location are arranged, a distance between the touch display screen and the vehicle airbag is greater than or equal to 1 mm, and less than or equal to 5 mm.

In a second aspect, the present application further provides a vehicle steering wheel assembly, which includes the vehicle-mounted display device as described in the first aspect.

In a third aspect, the present application further provides a vehicle, which includes the vehicle steering wheel assembly as described in the second aspect.

The vehicle-mounted display device provided in the present application includes a decorative member and a touch display screen. The decorative member includes a connecting part, a first mounting location, and a second mounting location. The connecting part is configured to be connected to the base of the vehicle steering wheel. The second mounting location is configured for mounting a vehicle airbag. The first mounting location is located above the second mounting location along an extension direction of the base. The first mounting location is configured for mounting the touch display screen. A surface of the touch display screen away from the base is lower than a surface of the decorative member away from the base. Thus, in the embodiments of the present application, a driver can view the vehicle status information during driving without deviating his/her sight line from the driving direction, and can view the instrument information without the aid of the gaps in the steering wheel, which makes the interaction between the driver and the vehicle more convenient, thereby effectively improving the safety, convenience and comfort during the driving.

### BRIEF DESCRIPTION OF THE DRAWINGS

The accompanying drawings herein are incorporated in and constitute a part of this specification, illustrate embodiments conforming to the present application, and, together with the specification, serve to explain the principles of the present application.

In order to describe the technical solutions in the embodiments of the present application or in the prior art more clearly, the accompanying drawings required to be used in the embodiments or in the prior art will be simply introduced below. Apparently, persons of ordinary skill in the art may still derive other drawings from these accompanying drawings without creative effort.
FIG. 1 is a schematic stereoscopic diagram of a vehicle steering wheel assembly according to an embodiment of the present application;
FIG. 2 is a schematic exploded diagram of a vehicle steering wheel assembly according to an embodiment of the present application;
FIG. 3 is a schematic diagram of a vehicle-mounted display device according to an embodiment of the present application;
FIG. 4 is a schematic stereoscopic back view of a vehicle-mounted display device according to an embodiment of the present application;
FIG. 5 is a schematic cross-sectional side view of a vehicle-mounted display device according to an embodiment of the present application;
FIG. 6 is a schematic side view of a vehicle-mounted display device according to an embodiment of the present application;
FIG. 7 is a schematic plan view of a touch display screen according to an embodiment of the present application; and
FIG. 8 is a schematic display diagram of a display area according to an embodiment of the present application.

Herein, the corresponding relationship between the reference numerals and the structures are as follows: 1. decorative member; 2. touch display screen; 3. steering wheel; 4. snapping pillar; 5. rear casing; 6. display control circuit board; 7. steering wheel control circuit board; 8. second layer of fixing pillar structure; 9. cover plate; 10. custom button control area; 11. first mounting location; 12. second mounting location; 13. base; 14. foaming member; 20. screen component; 21. liquid crystal touch display component; 22. backlight structure; 23. cover plate structure; 24. viscous structure; 25. screw; 26. touch area; 27. display area; 70. circuit board; 221. MiniLED; 223. interactive icon display area; 224. interactive icon pattern; 51. aperture.

### DETAILED DESCRIPTION

For the purpose of clear understanding of the above purposes, features and advantages of the present application, the solutions of the present application are further described below. It should be noted that the embodiments in the present application and the features in the embodiments may be combined with each other without conflict.

In the following description, many specific details are set forth to facilitate a thorough understanding of the present application. However, the present application may also be implemented in other ways different from those described herein. Obviously, the embodiments in the specification are merely some rather than all of the embodiments of the present application.

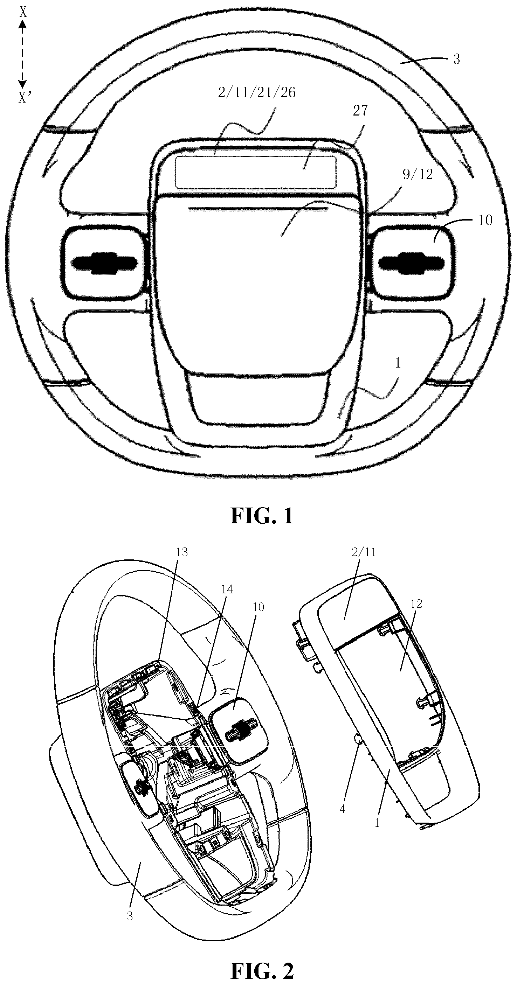

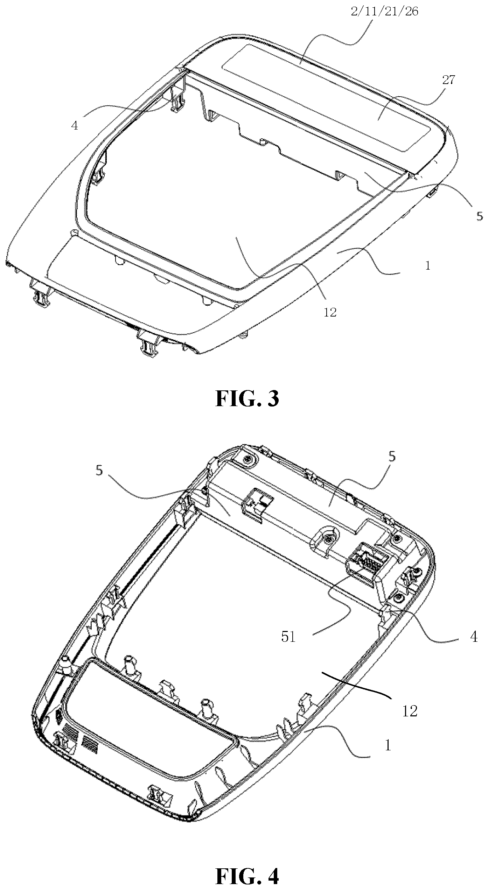

FIG. 1 is a schematic stereoscopic diagram of a vehicle steering wheel assembly according to an embodiment of the present application. FIG. 2 is a schematic exploded diagram of a vehicle steering wheel assembly according to an embodiment of the present application. FIG. 3 is a schematic diagram of a vehicle-mounted display device according to an embodiment of the present application. With reference to FIG. 1 and FIG. 2, the vehicle-mounted display device includes a decorative member 1. The decorative member 1 includes a connecting part 4, a first mounting location 11, and a second mounting location 12. The decorative member 1 is mounted on a base 13 of a vehicle steering wheel through the connecting part 4. The second mounting location 12 is configured for mounting a vehicle airbag. The first mounting location 11 and the second mounting location 12 are arranged side by side on the decorative member 1, and the first mounting location 11 is located above the second mounting location 12 along a direction XX' in which the first mounting location 11 and the second mounting location 12 are arranged. In some embodiments, the decorative member 1 is fixed to the base 13 of the vehicle steering wheel 3, and the decorative member 1 is a closed annular structure. The vehicle-mounted display device further includes a touch display screen 2. The first mounting location 11 is configured for mounting the touch display screen 2.

In some embodiments, with reference to FIG. 1 and FIG. 2, the decorative member 1 serves as a framework for connecting a screen assembly and the steering wheel 3. The decorative member 1 may be fixed to the base 13 of the steering wheel 3, and the decorative member 1 may be a closed annular structure as shown in FIG. 1. The vehicle-mounted display device further includes a touch display screen 2. For example, a user can obtain contents, such as displaying a reversing image, navigation information, mileage information, or speed information, by touching a corresponding interactive icon in an interactive icon display area of the touch display screen 2. The touch display screen 2 is embedded into the decorative member 1. In some embodiments, as shown in FIG. 1 and FIG. 2, the touch display screen 2 may be arranged in a position above a middle area of the steering wheel 3 to facilitate viewing by the driver. Thus, in the embodiments of the present application, the driver can view the vehicle status information during driving without deviating his/her sight line from the driving direction, and can view the instrument information without the aid of the gaps in the steering wheel, so that convenient human-vehicle interaction display touch may be realized. On the basis of the existing functions of the steering wheel 3, a convenient operation solution, in which the drivers and the passengers may quickly recognize the driving information and related human-vehicle interaction at the steering wheel 3, is realized.

In some embodiments, as shown in FIG. 1, a custom button control area 10 may be provided on each side of the decorative member 1. The custom button control area 10 may be integrated with the control of vehicle lights, volume, and other functions, and may be set according to the usage of the vehicle. In some embodiments, the custom button control area 10 may be provided with touch buttons, which are arranged on both sides of the base 13 in a width direction of the vehicle.

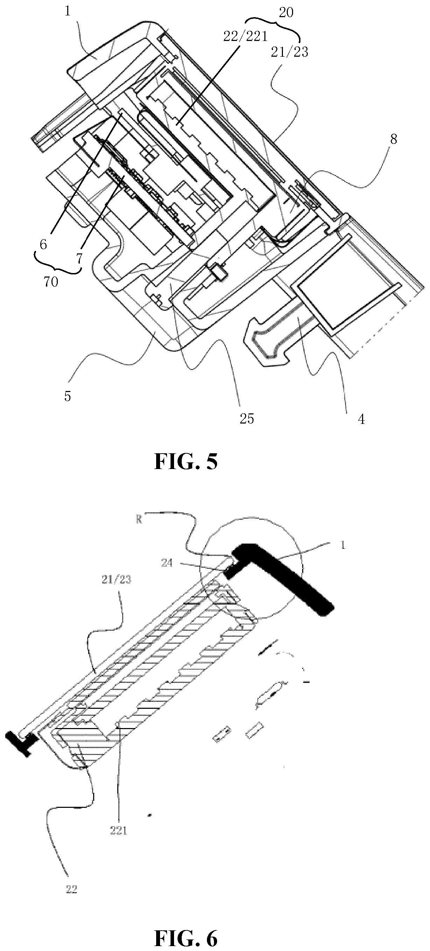

FIG. 4 is a schematic back view of a vehicle-mounted display device according to an embodiment of the present application. FIG. 5 is a schematic cross-sectional side view of a vehicle-mounted display device according to an embodiment of the present application. In some embodiments, with reference to FIG. 1 to FIG. 5, the touch display screen 2 includes a screen component 20, a circuit board 70, and a rear casing 5. The screen component 20 corresponds to the first mounting location 11 and is mounted on the decorative member 1. The rear casing 5 corresponds to the first mounting location 11 and is mounted on one side of the decorative member 1 adjacent to the base 13. An independent space is formed among the rear casing 5, the decorative member 1 and the screen component 20, and the circuit board 70 is arranged in the independent space.

In some embodiments, the decorative member 1 is fixedly connected to each of the rear casing 5 and the screen component 20, to form an independent space. For example, a nut structure is provided on the rear casing 5, a threaded structure is provided on the decorative member 1, and the nut structure provided on the rear casing 5 is rotatably connected to the threaded structure provided on the decorative member 1, to allow the rear casing 5 to be tightly fixed on the decorative member 1. The circuit board 70 of the touch display screen 2 may include, for example, a display control circuit board 6 and a steering wheel control circuit board 7 as shown in FIG. 5. The arrangement of the circuit board 70 (that is, the display control circuit board 6, the steering wheel control circuit board 7 and the related circuit wirings) in the independent space realizes an effect of storing the circuit board 70 and the circuits. In this way, the display control circuit board 6 and the steering wheel control circuit board 7 may be prevented from being exposed to the outside and being damaged by sewage or dust, thereby improving the cleanliness and safety of the vehicle-mounted display device.

Meanwhile, the rear casing 5 is provided with an aperture 51. For example, a power connector of the circuit board 70 may be located on the steering wheel control circuit board 7. The aperture 51 allows the power connector of the steering wheel control circuit board 7 to be exposed, which facilitates the connection of a vehicle power supply such as a low-voltage battery or a DC converter with the power connector of the steering wheel control circuit board 7 to supply power to the vehicle steering wheel control circuit board 7, and also facilitates the wiring connection between the vehicle and the vehicle-mounted display device, and the signal interaction between the steering wheel control circuit board 7 and the vehicle.

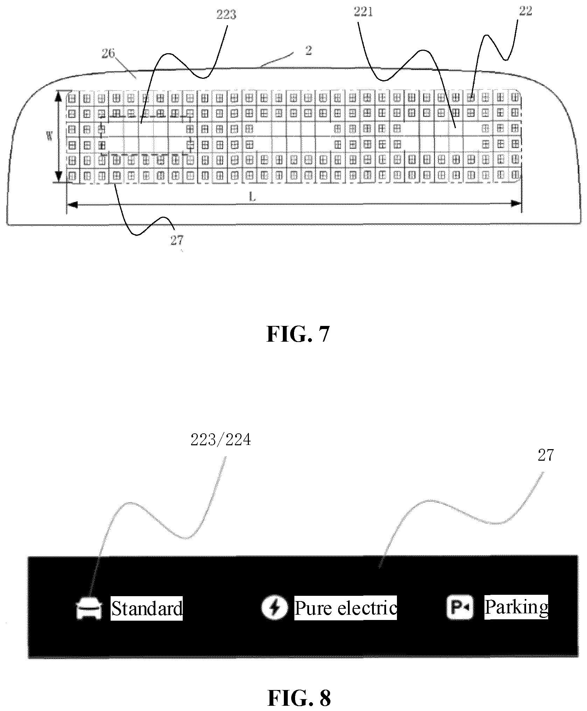

FIG. 6 is a schematic side view of a vehicle-mounted display device according to an embodiment of the present application. FIG. 7 is a schematic plan view of a touch display screen according to an embodiment of the present application. In some embodiments, with reference to FIG. 5 to FIG. 7, the touch display screen 2 includes a liquid crystal touch display component 21 and a backlight structure 22. The liquid crystal touch display component 21 is fixed on the decorative member 1 through an adhesive. The backlight structure 22 is located on one side of the liquid crystal touch display component 21 adjacent to the circuit board 70, and includes a plurality of MiniLEDs 221 arranged in a matrix.

In some embodiments, the touch display screen 2 may include a liquid crystal touch display component 21 and a backlight structure 22. Since the liquid crystal touch display component 21 is a non-active light-emitting electronic device which does not have a light-emitting characteristic, the liquid crystal touch display component 21 must rely on the backlight structure 22 to obtain the display performance. Therefore, the brightness of the liquid crystal touch display component 21 is determined by the backlight structure 22. The backlight structure 22 is arranged on one side of the liquid crystal touch display component 21 as shown in FIG. 5 adjacent to the display control circuit board 6. The display control circuit board 6 controls the brightness of the liquid crystal touch display component 21 by controlling the brightness of the backlight structure 22. The liquid crystal touch display component 21 includes a cover plate structure 23, such as a glass cover plate and a liquid crystal cell. The operating principle of the liquid crystal touch display component 21 is well known to those skilled in the art, which will not be repeated herein. In order to firmly bond the cover plate structure 23 with the steering wheel 3, the cover plate structure 23 is bonded to the decorative member 1 through a viscous structure 24, such as an adhesive with high stability. For example, the adhesive may be selected as a transparent tape, and four edges of the touch display screen 2 are tightly bonded to the decorative member 1 through the transparent tape, which is conducive to realizing a narrow border design of the touch display screen 2 on the steering wheel 3, effectively reducing the border size of the touch display screen 2, and further improving the effective area ratio of the display area in the touch display screen 2. The touch display screen 2 may display more human-vehicle interaction contents, so that the information interaction ability of the steering wheel 3 is improved.

In addition, if the cover plate structure 23 of the touch display screen 2 is fixed to the decorative member 1 by using a fixed buckle or the like, when the touch display screen 2 is subjected to an external extrusion force, such as an instantaneous external extrusion force applied when the vehicle airbag is ejected, the glass of the cover plate structure 23 is easily broken. In the embodiments of the present application, the cover plate structure 23 is bonded to the decorative member 1 through the viscous structure 24. When the touch display screen 2 is subjected to an external extrusion force, such as an instantaneous external extrusion force applied when the vehicle airbag is ejected, in a case that the force in a direction corresponding to the applied external pressure is greater than the adhesive force of the viscous structure 24, the touch display screen 2 may be detached as a whole from the decorative member 1, which effectively reduces the probability of the cover plate structure 23 of the touch display screen 2 being extruded and broken.

In some embodiments, with reference to FIG. 1 to FIG. 6, a surface of the screen component 20 away from the base 13 may be set to be flush with a surface of the decorative member 1 in the first mounting location 11 away from the base 13. That is, an upper surface of the touch display screen 2 adjacent to the vehicle airbag is flush with an upper surface of the decorative member 1. On the one hand, the steering wheel provided with the display screen has a beautiful overall design and is not easy to accumulate dust, so that it is easy to clean, and on the other hand, it is possible to prevent the sharp edges of the touch display screen 2 from cutting the vehicle airbag and causing secondary injury or hurt to the driver due to the touch display screen 2 being higher than the decorative member 1.

In some embodiments, with reference to FIG. 2 to FIG. 5, the connecting part 4 includes at least one snapping pillar. The decorative member 1 is mounted on the base 13 through the at least one snapping pillar. In some embodiments, a plurality of snapping pillars 4 are provided on one side of the decorative member 1 adjacent to the base 13 of the steering wheel 3. The decorative member 1 is fixed to the base 13 of the steering wheel 3 through the plurality of snapping pillars 4.

In some embodiments, a plurality of snapping pillars 4 may be provided on one side of the decorative member 1 adjacent to the base 13 of the steering wheel 3, and the base 13 of the steering wheel 3 may be provided with a plurality of foaming members 14, each of the plurality of snapping pillars 4 corresponding to a respective one of the plurality of foaming members 14. Each of the plurality of snapping pillars 4 is configured to be inserted into the respective one of the plurality of foaming members 14 to form a snap-fitting between each of the plurality of snapping pillars 4 and the respective one of the plurality of foaming members 14. Since the foaming member 14 is elastic, a snapping hole for the interference fit with the snapping pillar 4 is provided on the foaming member 14. After an end of the clamping pillar 4 enters the snapping hole in the foaming member 14, the snapping hole is elastically contracted, and the snapping pillar 14 is snapped into the snapping hole, to allow the decorative member 1 to be fixed to the base 13 of the steering wheel 3. The installation method is convenient and the fixation is firm.

In some embodiments, the decorative member 1 is in a quasi-rectangular shape, and each of four borders of the decorative member 1 is provide with the at least one snapping pillar 4.

In some embodiments, with reference to FIG. 2 to FIG. 5, the decorative member 1 is in a general rectangular shape. The decorative member 1 may be fixed to the base 13 of the steering wheel 3. Each of four borders of the decorative member 1 is provided with the snapping pillar 4, and each of the snapping pillars 4 on the four borders is connected to a respective of socket structures on the steering wheel 3, to allow the decorative member 1 to be fixed to the body of the steering wheel 3. Therefore, in the embodiments of the present application, with the appearance design and the fixed structure design of the decorative member 1, the touch display screen 2, the vehicle airbag system, and the vehicle horn system are effectively arranged in the narrow middle area of the steering wheel 3, so that the beautiful design of the steering wheel 3 is realized while realizing the technical functions of the steering wheel.

In some embodiments, the vehicle airbag is not shown in FIG. 1 to FIG. 3. A cover plate 9 is shown in FIG. 1, and the vehicle airbag arranged in the second mounting location 12 is covered by the cover plate 9. In the event of a frontal collision between the vehicle and other vehicles or obstacles, the vehicle airbag may be normally ejected without being affected by the touch display screen 2. Further, the ejection position of the vehicle airbag may protect the head, chest and other important organs of the driver, thereby guaranteeing the life safety of the driver.

In addition, the touch display screen 2 may be embedded into the first mounting location 11, and the touch display screen may be joined together with the vehicle steering wheel 3 and rotate with the steering of the vehicle steering wheel 3. Thus, in the embodiments of the present application, with the appearance design and the fixed structure design of the decorative member 1, the touch display screen 22, the vehicle airbag system, and the vehicle horn system are effectively arranged in the narrow middle area of the steering wheel 3, so that the beautiful design of the steering wheel 3 is realized while realizing the technical functions of the steering wheel. In addition, in the embodiments of the present application, a structure solution in which the display system and the vehicle airbag are arranged side by side is realized, so that the convenient human-vehicle interaction display touch is realized without affecting the functions of the vehicle airbag and the vehicle horn, and the effective system integration of the vehicle safety function and the display function is realized. On the basis of the existing functions of the steering wheel 3, a convenient operation solution, in which the drivers and the passengers may quickly recognize the driving information and related human-vehicle interaction at the steering wheel 3, is realized.

In addition, the accompanying drawings in the present application merely schematically shows the shape of the decorative member 1, and the specific shape of the decorative member 1 in the embodiments of the present application may be determined according to actual needs, as long as the decorative member 1 may be adapted to the touch display screen 2, the vehicle airbag and the base 13 of the steering wheel 3.

In some embodiments, as shown in FIG. 1, a cover plate 9 corresponding to the second mounting location 12 is provided. The cover plate 9 covers the vehicle airbag and forms a press type whistle structure.

In some embodiments, the vehicle airbag is not shown in FIG. 1. FIG. 1 shows the cover plate 9, and the vehicle airbag arranged in the independent space is covered by the cover plate 9. A vehicle whistle system corresponding to the cover plate 9 is further provided, which may allow the vehicle to whistle by pressing the cover plate 9. Thus, in the embodiments of the present application, with the appearance design and the fixed structure design of the decorative member 1, the touch display screen 2, the vehicle airbag system, and the vehicle horn system are effectively arranged in the narrow middle area of the steering wheel 3, so that the beautiful design of the steering wheel 3 is realized while realizing the technical functions of the steering wheel. In addition, in the embodiments of the present application, a structure solution in which the display system and the vehicle airbag are arranged side by side is realized, so that the convenient human-vehicle interaction display touch is realized without affecting the functions of the vehicle airbag and the vehicle horn, and the effective system integration of the vehicle safety function and the display function is realized. On the basis of the existing functions of the steering wheel 3, a convenient operation solution, in which the drivers and the passengers may quickly recognize the driving information and related human-vehicle interaction at the steering wheel 3, is realized.

In some embodiments, R shown in FIG. 6 represents arc corners on an upper edge and a lower edge of the cover plate structure 23. The corners on the upper edge and the lower edge of the cover plate structure 23 may be set as arc corners. If the corners on the upper edge and the lower edge of the cover plate structure 23 are set as sharp right-angled corners, the corresponding position is subjected to a greater stress when extruded by an external force, and the greater impact force applied when the vehicle airbag is ejected may easily cause the glass cover plate of the touch display screen 2 to be broken. The design of the corners on the upper edge and the lower edge of the cover plate structure 23 as arc corners greatly reduces the pressure in the corresponding position when the touch display screen 2 is subjected to the external extrusion force. When the vehicle airbag is ejected and a greater external force is instantaneously applied to the side where the touch display screen 2 is located, the design of the corners on the upper edge and the lower edge of the cover plate structure 23 as arc corners may buffer the extrusion pressure during the extreme use of the vehicle airbag or when the cover plate glass is extruded outward from the center of the steering wheel by a huge external force, so that the probability of breakage of the cover plate glass of the touch display screen 2 is greatly reduced.

In order to fix the backlight structure 22, the steering wheel control circuit board 7, the display control circuit board 6, and the rear casing 5 relative to each other, a first layer of fixing pillar structure and a second layer of fixing pillar structure 8 are provided on one side of the backlight structure 22 adjacent to the display control circuit board 6. FIG. 5 merely schematically shows the second layer of fixing pillar structure 8. The first layer of fixing pillar structure and the second layer of fixing pillar structure are misaligned with each other. The display control circuit board 6 is fixed to the backlight structure 22 through the first layer of fixing pillar structure, and the backlight structure 22 and the steering wheel control circuit board 7 are fixed to the rear casing 5 through the second layer of fixing pillar structure 8. In particular, with reference to FIG. 5, for example, the second layer of fixing pillar structure 8 may be set to be hollow, and an inner wall of the hollow structure is provided with a threaded structure. By screwing a screw 25 outside the rear casing 5, the backlight structure 22 is fixed to the rear casing 5. After the screw 25 is tightened, the backlight structure 22 and the rear casing 5 clamp the steering wheel control circuit board 7 to fix the steering wheel control circuit board 7. Thus, the display control circuit board 6, the steering wheel control circuit board 7, and the backlight structure 22 are fixedly assembled in an independent narrow space, thereby saving the vehicle space, and improving the firmness of the installation of the vehicle-mounted display device on the vehicle steering wheel 3. In the event of bump or collision of the vehicle, the use of the vehicle-mounted display device will not be affected.

Furthermore, with reference to FIG. 5 to FIG. 7, the MiniLEDs 221 provided in the embodiments of the present application are direct type MiniLEDs 221. The light emitted by the direct type MiniLEDs 221 may be directly illuminated upwards and emitted from the light emitting surface. Compared with the edge-lit type MiniLEDs, the direct type MiniLEDs 221 have higher light emitting efficiency and better uniformity. It should be noted that the display control principle and the touch principle of the liquid crystal touch display component 21 are well known to those skilled in the art, which will not be repeated herein. Furthermore, the touch display screen 2 may be a display screen using display technology, such as Organic Light-Emitting Diode, OLED, Micro Light-Emitting Diode, MicroLED, Mini Light-Emitting Diode, MiniLED, etc., which is not specifically limited in the embodiments of the present application.

FIG. 8 is a schematic display diagram of a display area according to an embodiment of the present application. With reference to FIG. 1 to FIG. 7, the touch display screen 2 may include a touch area 26 and a display area 27. An area of the touch area 26 is larger than an area of the display area 27, and the display area 27 is covered by the touch area 26. The display area 27 corresponds to the backlight structure 22. The backlight structure 22 adopts a plurality of direct type MiniLEDs. In some embodiments, for example, the display area 27 may be configured to display content that implements human-vehicle interaction, so that the driver may control the vehicle to perform corresponding operations by touching the touch area 26 corresponding to the display area 27. A portion of the touch area 26 that exceeds the display area 27 is a reserved area. Elements, for example icon controllers, such as a media controller, a navigation controller, a restart controller, and a volume controller, can be added to the reserved area according to the vehicle usage needs, realizing the diversification and flexibility of the human-vehicle interaction functions.

The touch area 26 may include a touch structure provided separately from the devices in the display area 27, or a touch structure integrated with the display screen and simultaneously manufactured in the manufacture process of the display area 27. For example, the touch area 26 may be a touch mode, such as One Glass Solution, OGS, in-cell, on-cell, or Glass Film Film, GFF. Adhesive, foam, or transparent tape may be used to bond the touch area 26 and the display area 27 together, so as to achieve the effect of integration of touch and display, while reducing the internal reflection between the touch area 26 and the display area 27, thereby optimizing the display effect of the touch display screen.

In some embodiments, the display area 27 may be set in a quasi-rectangular shape. For example, in FIG. 1 to FIG. 3 and FIG. 7, four corners of the display area 27 may be set as rounded corners. Exemplarily, the four corners may be designed as rounded corners with the specification of R2.0mm (radius 2.0 mm), so that the display area 27 may effectively match the overall sleek appearance design of the vehicle steering wheel 3, thereby improving the aesthetics of the vehicle. The width-to-length ratio of the display area 27 is equal to 1: N, in which N is greater than or equal to 4, and less than or equal to 6. L shown in FIG. 6 represents the length of the display area 27, and W represents the width of the display area 27. That is, W: L is equal to 1: N. The touch display screen 2 may adopt the 4.8-inch Liquid Crystal Display, LCD technology. The size of the display area 27 may be set to be 120*24 mm (that is, the width is 24 mm, and the length is 120 mm), and the resolution may reach 800*RGB*166 (that is, the number of three primary colors is 800*3*166), which may meet the display requirements of the retina level. For example, the width-to-length ratio of the display area 27 may be 1: 5, which satisfies the golden display ratio of 1: 5, which is unique in the structure of the steering wheel 3, and is conducive to the array layout of interactive icon patterns 224. Thus, in the embodiments of the present application, the display area 27 is set in a quasi-rectangular shape, and the width-to-length ratio of the display area 27 is equal to 1: N, which satisfies the integration of the multi-function system in the narrow structure area of the vehicle steering wheel 3, the multi-function system including multiple systems such as display, touch, software system, horn system, vehicle airbag, etc., and which is conducive to the display of the interactive icon patterns 224 arranged in an array on the touch display screen 2, thereby improving the display effect of the touch display screen 2.

In addition, with reference to FIG. 1 to FIG. 8, the liquid crystal touch display component 21 further includes a liquid crystal module and a touch module. The display control circuit board 6 controls the arrangement direction of liquid crystals in a liquid crystal cell by applying an electrical signal to electrodes in the liquid crystal cell. Meanwhile, the display control circuit board 6 also controls the display content and brightness of the liquid crystal touch display component 21 by controlling the brightness of the backlight structure 22. The touch module includes touch electrodes to recognize touch commands input by the user. The backlight structure 22 corresponds to the display area 27. The backlight structure 22 may include a plurality of Mini Light Emitting Diodes, MiniLEDs 221 arranged in a matrix in the display area 27 as shown in FIG. 6. The local dimming in a smaller range is achieved through dense coverage, so that better brightness uniformity, higher color contrast, and higher brightness indicators are achieved in a smaller optical distance. A display effect with a contrast of 1000000: 1 may be achieved, which is increased by 1000 times compared with a regular touch display screen with a contrast of 1000: 1. Corresponding to the area where the interactive icon patterns 224 need to be lit up, the MiniLEDs 223 are controlled to be powered on and lit up. Corresponding to the remaining areas which do not need to be displayed, the MiniLEDs 223 are controlled to be powered off and turned off, so that the unlit areas are black, thereby avoiding the problem of screen glare during nighttime driving, providing a comfortable screen brightness for the driver, and improving the user experience and driving safety.

With reference to FIG. 7 and FIG. 8, in some embodiments, when it is necessary to display, for example, the parking interactive icon pattern 224 on the touch display screen 2 of the vehicle steering wheel 3, the MiniLEDs 221 arranged in the parking interactive icon display area 223 may be controlled to be lit up, while the MiniLEDs 221 arranged in the display area 27 other than the parking interactive icon display area 223 are controlled to be turned off, that is, the areas other than the parking interactive icon display area 223 are displayed in black color. In this way, the touch display screen 2 may be integrated with the surrounding environment, thereby optimizing the visual effect of the vehicle-mounted display device.

In some embodiments, the decorative member 1 may be made through a plastic electroplating process.

In some embodiments, compared with traditional metal decorative members, the decorative member 1 in the embodiments of the present application may be made through a plastic electroplating process. For example, ABS plastic is used as the material of the decorative member 1. The ABS plastic is a ternary copolymer of Acrylonitrile-Butadiene-Styrene. When the decorative member 1 is made through the plastic electroplating process, the Butadiene in the ABS plastic is chemically corroded, so that the surface of the product presents loose and fine holes. And then a layer of conductor, such as copper, is attached to the product to allow the product to be conductive. And then electroplating is carried out according to the metal electroplating method. Then, a layer of metal film is plated on the surface of the product. The decorative member 1 thus made may not only have a good metal texture, but also have a reduced weight, which may effectively improve the appearance and decorative properties of the plastic, and may further improve its performance in terms of electricity, thermal, and corrosion resistance.

Moreover, during use, the touch display screen 2 may experience malfunctions such as blurred screen due to external static electricity. Thus, it is necessary to export the static electricity near the touch display screen 2. In the embodiments of the present application, the decorative member 1 is made through the plastic electroplating process, which has the technical function of providing static electricity protection for the vehicle-mounted display device, while satisfying the beautiful design. The unique material and structure of the decorative member of the display system of the steering wheel 3 effectively integrate the electronic protection and structural assembly functions.

In some embodiments, as shown in FIG. 1, in the direction XX' in which the first mounting location 11 and the second mounting location 12 are arranged, a distance between the touch display screen 2 and the vehicle airbag is greater than or equal to 1 mm, and less than or equal to 5 mm. That is, in the direction XX' in which the first mounting location 11 and the second mounting location 12 are arranged, the distance between the nearest edges of the first mounting location 11 and of the second mounting location 12 is greater than or equal to 1 mm, and less than or equal to 5 mm. In some embodiments, since a horn switch corresponding to the vehicle airbag is usually provided (that is, in the position where the cover plate 9 is located as mentioned in the aforementioned embodiment), after the cover plate 9 is pressed, the horn switch is turned on, and the horn starts to operate. That is, the distance between the vehicle airbag and the touch display screen 2 may provide a necessary distance for the travel of the horn switch. If the distance is too small, the horn switch cannot be turned on, and the probability of breakage of the glass cover plate of the touch display screen 2 when the vehicle airbag is ejected will be increased, which is easy to cause secondary injury. If the distance is too large, the gap between the airbag and the touch display screen 2 may affect the overall aesthetics.

The embodiments of the present application also provide a vehicle steering wheel assembly, which includes the vehicle-mounted display device as described in the above embodiments. Thus, the vehicle steering wheel assembly provided in the embodiments of the present application has the beneficial effect of the above embodiments of the vehicle-mounted display device, which is not repeated herein.

The embodiments of the present application also provide a vehicle, which includes the vehicle steering wheel assembly as described in the above embodiments. Thus, the vehicle provided in the embodiments of the present application has the beneficial effect of the above embodiments of the vehicle steering wheel assembly. In addition, the vehicle described in the embodiments of the present application may be a fuel vehicle, a pure electric vehicle, or a petrol-electric hybrid vehicle, etc., which is not specifically limited in the embodiments of the present application. In some embodiments, the vehicle provided in the embodiments of the present application is an intelligent driving vehicle, which may realize the human-vehicle interaction function, such as intelligent driving, through the touch display screen arranged on the steering wheel.

It should be noted that herein, relational terms such as "first" and "second" are merely used to distinguish one entity or operation from another entity or operation, without necessarily requiring or implying the existence of any actual relationship or order between these entities or operations. Further, terms "include", "comprise" or any other variants thereof are intended to cover non-exclusive inclusion, so that a process, a method, an article or a device including a series of elements not only includes those elements, but also includes those that are not explicitly listed, or also include elements inherent to the process, the method, the article, or the device. In the case that there are no more limitations, an element defined by the phrase "including a..." does not exclude the existence of other same elements in the process, the method, the article, or the device that includes the element.

In the present application, unless otherwise definitely specified and limited, terms "mount", "mutually connect", "connect", "fix" and the like should be broadly understood. For example, the terms may refer to fixed connection and may also refer to detachable connection or integration. The terms may refer to mechanical connection and may also refer to electrical connection or may be communicable with each other. The terms may refer to direct mutual connection, may also refer to indirect connection through a medium and may refer to communication in two elements or an interaction relationship of the two elements. For those of ordinary skill in the art, specific meanings of these terms in the present application can be understood according to a specific condition.

In the present application, unless otherwise definitely specified and limited, a first feature being "above" or "below" a second feature may include the first feature and the second feature being in direct contact, or the first feature and the second feature being in contact through a medium. Moreover, the first feature being "over", "above", and "on" the second feature may be that the first feature is right above or not right above the second feature, or merely means that the level of the first feature is higher than that of the second feature. The first feature being "under", "below", and "beneath" the second feature may be that the first feature is directly below or not directly below the second feature, or merely means that the level of the first feature being lower than that of the second feature.

In the present application, the terms "one embodiment", "some embodiments", "example", "specific example" or "some examples" indicates that a specific feature, structure, material or characteristic described in combination with the embodiment or example is included in at least one embodiment or example of the present application. In the specification, the schematic representation of the above terms is not necessary to be directed to the same embodiment or example. Further, the specific feature, structure, material, or characteristic described may be combined in any one or more embodiments or examples in a suitable manner. Furthermore, without contradiction, those skilled in the art may combine the different embodiments or examples and the features in the different embodiments or examples described in the specification.

Although the above embodiments have been shown and described, it should be understood that the above embodiments are exemplary and cannot be understood as a limitation of the present application. Changes, modifications, substitutions, and variants to the above embodiments made by those of ordinary skill in the art are within the protection scope of the present application.

## Claims

1. A vehicle-mounted display device, comprising:
a decorative member and a touch display screen, wherein the decorative member comprises a connecting part, a first mounting location, and a second mounting location, wherein the decorative member is mounted on a base of a vehicle steering wheel through the connecting part, the first mounting location is configured for mounting the touch display screen, and the second mounting location is configured for mounting a vehicle airbag;
wherein the first mounting location and the second mounting location are arranged side by side on the decorative member, and the first mounting location is located above the second mounting location along a direction in which the first mounting location and the second mounting location are arranged.

2. The vehicle-mounted display device according to claim 1, wherein the touch display screen is embedded into the first mounting location, and the touch display screen is joined together with the vehicle steering wheel and rotates with steering of the vehicle steering wheel.

3. The vehicle-mounted display device according to claim 1 or 2, wherein the touch display screen comprises:
a screen component, a circuit board, and a rear casing, wherein the screen component corresponds to the first mounting location and is mounted on the decorative member, the rear casing corresponds to the first mounting location and is mounted on one side of the decorative member adjacent to the base, the circuit board is arranged in an independent space formed among the rear casing, the screen component and the decorative member, and the rear casing is provided with an aperture which exposes a power connector of the circuit board.

4. The vehicle-mounted display device according to claim 3, wherein a surface of the screen component away from the base is flush with a surface of the decorative member in the first mounting location away from the base.

5. The vehicle-mounted display device according to claim 3, wherein the screen component comprises a liquid crystal touch display component and a backlight structure, wherein the liquid crystal touch display component is fixed on the decorative member through an adhesive, and the backlight structure is located on one side of the liquid crystal touch display component adjacent to the circuit board and comprises a plurality of MiniLEDs arranged in a matrix.

6. The vehicle-mounted display device according to claim 5, wherein brightness of the liquid crystal touch display component is controlled by the backlight structure.

7. The vehicle-mounted display device according to claim 5, wherein a first layer of fixing pillar structure and a second layer of fixing pillar structure are provided on one side of the backlight structure adjacent to the circuit board, wherein the first layer of fixing pillar structure and the second layer of fixing pillar structure are misaligned with each other.

8. The vehicle-mounted display device according to claim 5, wherein the liquid crystal touch display component comprises a touch area and a display area, wherein an area of the touch area is larger than an area of the display area, and the display area is covered by the touch area, the display area corresponds to the backlight structure, and the plurality of MiniLEDs of the backlight structure adopts direct type MiniLEDs.

9. The vehicle-mounted display device according to claim 1, wherein the connecting part comprises at least one snapping pillar, and the decorative member is mounted on the base through the at least one snapping pillar.

10. The vehicle-mounted display device according to claim 9, wherein a plurality of snapping pillars are provided on one side of the decorative member adjacent to the base, and the base of the vehicle steering wheel is provided with a plurality of foaming members, each of the plurality of snapping pillars corresponding to a respective one of the plurality of foaming members, wherein each of the plurality of snapping pillars is configured to be inserted into the respective one of the plurality of foaming members to form a snap-fitting between each of the plurality of snapping pillars and the respective one of the plurality of foaming members.

11. The vehicle-mounted display device according to claim 9 or 10, wherein the decorative member is in a quasi-rectangular shape, and each of four borders of the decorative member is provide with the at least one snapping pillar.

12. The vehicle-mounted display device according to claim 1, further comprising the vehicle airbag, wherein the second mounting location is provided with a cover plate, the cover plate covering the vehicle airbag and forming a press type whistle structure.

13. The vehicle-mounted display device according to claim 1, wherein in the direction in which the first mounting location and the second mounting location are arranged, a distance between the touch display screen and the vehicle airbag is greater than or equal to 1 mm, and less than or equal to 5 mm.

14. A vehicle steering wheel assembly, comprising the vehicle-mounted display device according to any one of claims 1 to 13.

15. A vehicle, comprising the vehicle steering wheel assembly according to claim 14.
